# EUROPÄISCHE PATENTSCHRIFT

(11) **EP 2 362 885 B1**
(45) Veröffentlichungstag und Bekanntmachung des Hinweises auf die Patenterteilung: **20.07.2016**
(21) Anmeldenummer: 09748789.6
(22) Anmeldetag: 10.11.2009
(51) Int. Cl.: C09C 1/58

(54) **RUSSGRANULAT, VERFAHREN ZUR HERSTELLUNG VON RUSSGRANULAT UND DESSEN VERWENDUNG**
CARBON BLACK GRANULATE, METHOD FOR PRODUCING CARBON BLACK GRANULATE, AND USE THEREOF
GRANULAT DE SUIE, PROCÉDÉ DE FABRICATION D'UN GRANULAT DE NOIR DE CARBONE ET SON UTILISATION

(30) Priorität: 11.11.2008 DE 102008043641
(43) Veröffentlichungstag der Anmeldung: 07.09.2011
(73) Patentinhaber: Orion Engineered Carbons GmbH, 60528 Frankfurt am Main (DE)
(72) Erfinder: BERTZICK, Manfred, 53902 Bad Münstereifel (DE); HEISTER, Werner, 50226 Frechen (DE); OSTENDORF, Wilfried, 50374 Erfstadt-Lechenich (DE); KATZER, Matthias, 63150 Heusenstamm (DE)
(74) Vertreter: f & e patent
(86) Internationale Anmeldenummer: PCT/EP2009/064863
(87) Internationale Veröffentlichungsnummer: WO 2010/055018

(56) Entgegenhaltungen:
- DE-A1- 2 703 016
- GB-A- 847 697
- US-A- 3 018 171
- US-A- 3 056 162
- US-A- 3 406 426

## Beschreibung

Die Erfindung betrifft ein Rußgranulat, ein Verfahren zur Herstellung von Rußgranulat sowie dessen Verwendung.

Bekanntlich fällt Ruß bei der Herstellung in fein verteilter Pulverform an. Üblicherweise ist es nicht nur nützlich, sondern außerordentlich erwünscht, das Rußpulver in eine Granulatform zu überführen, um die Handhabungseigenschaften des Produktes zu verbessern (Donnet, J.-B. et al. Carbon Black Science and Technology, 2nd Edition, Marcel Dekker, Inc. New York 1993, S. 27-31). Zu diesen Handhabungseigenschaften zählen beispielsweise:
- Lagereigenschaften, beispielsweise im Silo: Festigkeit beim Fall, Abriebfestigkeit, Fließfähigkeit, Brückenbildung, Zeitverfestigung, etc.,
- Transporteigenschaften, beispielsweise im LKW oder bei der pneumatischen Förderung: Entladezeit, Staubbelastung, Abriebfestigkeit, Fließfähigkeit, Brückenbildung, etc.,
- Verarbeitbarkeit, beispielsweise bei der Dosierung oder Dispergierung: Staubbelastung, Fließfähigkeit, Dispergierzeiten, erforderliche Dispergierleistung, Dispergiergüte, etc.,
- physikalische und anwendungstechnische Eigenschaften, beispielsweise bei Pigmentrußen für Farben und Lacke: Farbstärke, Farbtiefe, Stippen, etc..

Es sind eine Reihe von Verfahren bekannt, nach denen Rußpulver unter trockenen oder feuchten Bedingungen in die Granulatform überführt werden kann (Pietsch, W., Agglomeration Processes, Wiley-VCH Verlag GmbH, Weinheim, 2002, S. 133-227). Zur Granulation von Ruß werden bekannterweise großtechnisch zwei unterschiedliche Verfahren verwendet. Diese sind die Trockengranulation in rotierenden Trommeln (DE 1262238, US 2,422,989, EP 0360236, EP 0814133) und die Nassgranulation in schnellrotierenden Mischgranulatoren. Bei dem letzteren Verfahren wird in dem Mischgranulator der pulverförmige Ruß mit Wasser, gegebenenfalls unter Zusatz eines Bindemittels, intensiv gemischt. Die feuchten Granulate werden anschließend in einem weiteren Verfahrensschritt getrocknet. Im Allgemeinen werden Mischgranulatoren mit Stachelwelle eingesetzt. Sie bestehen aus einem liegend angeordneten, feststehenden Rohr (Stator), mit einer darin sich drehenden Stachelwelle. Zwischen der Achse der Stachelwelle und der Rohrwandung befindet sich der für die Granulation zur Verfügung stehende Granulationsraum. Im Granulationsraum wird der Ruß vom Einlauf am einen Ende des Rohres zum Auslauf am anderen Ende des Rohres durch die sich drehende Stachelwelle befördert. Dabei erfolgt die Granulation durch Abrollen des Rußes an der stehenden Rohrwandung (DE 1264412, US 3,607,086, US 3,787,161, US 4,222,727, EP 1464681).

Die Trockengranulation ist in der Anwendung limitiert. Im Allgemeinen liefert sie gut dispergierbare Produkte mit vergleichsweise schlechten Transporteigenschaften. Insbesondere hochstrukturierte Furnaceruße erfordern eine Nassgranulation, um Rußgranulate von geeigneter Festigkeit und Stabilität zu erhalten.

Eine deutliche Verbesserung der Transporteigenschaften konnte dabei bislang nur über die Zugabe von Bindemitteln bei der Granulation erzielt werden, was jedoch zu einer deutlichen Verschlechterung der Dispergierbarkeit führt. Zudem ist eine Bindemittelzugabe häufig nicht möglich, da es eine Produktverunreinigung darstellt und für zahlreiche Anwendungen nicht zugelassen ist.

Obwohl bereits eine Reihe von Nassgranulationsverfahren zur Verfügung stehen, ist die Herstellung von Rußgranulat mit hervorragenden Handlingseigenschaften immer noch unbefriedigend.

Beispielsweise ist aus US 2,828,191 ein Verfahren zur Herstellung von Rußgranulat bekannt, wobei man Rußpulver und Wasser bei einem Wassermassenanteil von 35-45% in einem Apparat mit mehreren übereinander angeordneten Pin-Mischerwellen bei Drehzahlen im Bereich zwischen 300 und 400 UpM aufgranuliert. Bei Drehzahlen größer 400 UpM resultieren jedoch schlecht dispergierbare Rußgranulate, welche in Gummimischungen unzureichend zerteilt vorliegen. Aus US 2,872,336 ist ein Verfahren zur Herstellung von transportstabilem Rußgranulat bekannt, wobei dem Ruß während der Verperlung Natriumtetraborate mit einem Massenanteil von 0,1-0,7%, bezogen auf das trockene Endprodukt, zugegeben wird. Das resultierende Rußgranulat zeigt eine erhöhte Gesamt- und Einzelperlhärte.

Ferner ist aus DE 2255637 ein Nassperl-Verfahren zur Herstellung von Rußgranulat bekannt, bei welchem die Wasserzugabe in zwei Stufen erfolgt. In einem ersten Schritt erfolgt das Mischen des Rußes mit 3-75% des notwendigen Perlwassers bei sehr hohen Scherraten, wie etwa in einer Hammermühle oder Mikropulverisiervorrichtung. Dabei werden Umdrehungsgeschwindigkeiten in den Vorrichtungen von 3500-6500 UpM gewählt. Im zweiten Schritt wird schließlich das restliche Wasser eingemischt. Das resultierende Rußgranulat hat den Nachteil, dass es deutlich erhöhte Festigkeiten aufweist.

Aus den Patentschriften GB 847 697 A, US 3 406 426, US 3 018 171 A, DE 27 03 016 A1 und US 3 056 162 A sind Russgranulate bekannt, die in einem 1. Mischgranulator, unter Zugabe einer Granulationsflüssigkeit, vorgranuliert und in einem 2. Mischgranulator ohne weitere Zugabe von Granulationsflüssigkeit fertig granuliert werden.

Die bekannten Verfahren erlauben entweder die Herstellung von vergleichsweise gut dispergierbaren Produkten mit schlechten Transporteigenschaften oder aber die Herstellung von transportstabilen Produkten mit mäßigen bis schlechten Dispergiereigenschaften.

Aufgabe der Erfindung ist es ein Rußgranulat zur Verfügung zu stellen, das gleichzeitig hervorragende Transport- und Dispergiereigenschaften aufweist.

Gegenstand der Erfindung ist ein Rußgranulat, welches dadurch gekennzeichnet ist, dass der APC-Wert, gemessen bei einer Fördergeschwindigkeit von 8 m/s und einer Feststoffbeladung von 27 g/kg, kleiner oder gleich 20 Gew.-%, vorzugsweise kleiner oder gleich 15 Gew.-%, besonders bevorzugt kleiner oder gleich 12 Gew.-%, ganz besonders bevorzugt kleiner oder gleich 8 Gew.-%, ist und der 25µm-Druckfilterwert kleiner oder gleich 5,0 bar·cm²/g, vorzugsweise kleiner oder gleich 2,0 bar·cm²/g, besonders bevorzugt kleiner oder gleich 0,7 bar·cm²/g, ganz besonders bevorzugt kleiner oder gleich 0,3 bar·cm²/g, ist.

Der APC-Wert kennzeichnet das Abriebs- und Bruchverhalten von Rußgranulat bei der pneumatischen Druckförderung. Bestimmt werden die Partikelgrößenverteilungen von Rußgranulat vor und nach der Förderung über eine Teststrecke. Über die Erhöhung des Staubanteils von Rußgranulat während der pneumatischen Förderung, lassen sich Rückschlüsse auf das Förderverhalten der eingesetzten Rußgranulat-Typen ziehen. Der APC-Wert wird unter Verwendung einer pneumatischen Fördertestapparatur bestimmt [Käferstein P., Mörl L., Dalichau J., Behns W., Anlage zum Schlussbericht des AiF-Projektes "Zerfallsverhalten von Partikeln in Wirbelschichten", Forschungsvorhaben-Nr. 11151 B, Magdeburg, 1999, S. 17 - 21], wobei abweichend hiervon die Granulatprobe über einen Venturi-Injektor eingebracht wird. Die eingesetzte pneumatische Druckfördertestapparatur ist in DE 102007025928.1 beschrieben. Die pneumatische Druckfördertestapparatur besteht im Wesentlichen aus
- zwei Förderrinnen,
- einem Luftstromregelventil,
- einem Venturi-Injektor,
- einer Förderstrecke ("Schlaufe + Bogen"),
- einem Laserbeugungsmessgerät,
- einem Abluftkasten und
- einer Schallschutzbox.

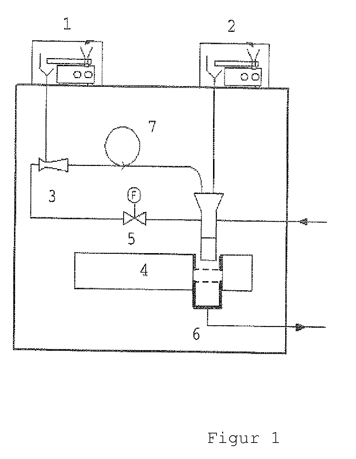

Figur 1 zeigt den Aufbau einer Förderapparatur:
1 Vibrationsrinne Belastungsstrecke,
2 Vibrationsrinne Referenzmessung,
3 Venturi-Injektor,
4 Laserbeugungsspektrometer,
5 Luftstromregelventil,
6 Abluftkasten,
7 Belastungsstrecke.

Die Schallschutzbox hat die Maße 1,9 * 1,3 * 1,0 m (L/H/B). Die Rohrleitungen aus Edelstahl besitzen einen Innendurchmesser von 44 mm. Die Schlaufe hat einen Umfang von 1,5 m. Der Bogen hat eine Länge von 0,5 m. Die Luft und der benötigte Förderdruck wird aus dem Druckluftnetz (6 bar) bezogen. Über das Luftstrom-Regelventil wird der Luftstrom bzw. die Luftgeschwindigkeit eingestellt, wobei die Anlage für einen maximalen Luftstrom von 180 m³/h ausgelegt ist. Die Luftgeschwindigkeit wird auf 8 m/s, bezogen auf den Rohrquerschnitt von 44 mm, eingestellt. Die Dosierung der Rußgranulate in das Fallrohr erfolgt über eine Vibrationsrinne. Die Vibrationsrinne und die Öffnung des Fallrohres sind zum Zwecke der Schallisolierung eingehaust. Zum Befüllen des Trichters lässt sich ein durchsichtiger Kunststoffdeckel öffnen. Die Förderrate an der Vibrationsrinne wird so gewählt, dass sich eine Feststoffbeladung von 27 g/kg Luft ergibt. Zur Einschleusung des Rußes in die Förderstrecke wird ein Venturi-Injektor benötigt. Der Injektor hat einen Durchmesser an der Engstelle von 22 mm und eine Beschleunigungsstrecke von 50 mm (Länge von der Rußgranulataufgabe über einen Trichter bis zum Diffusorende). Nach dem Injektor folgt die Förderstrecke (Schlaufe + Bogen), in der die Rußgranulate beansprucht werden. Anschließend gelangt der Ruß über einen Trichter in den aufgeweiteten Laserstrahl des Laserbeugungsmessgerätes. Die Partikelgrößenverteilung wird aufgenommen. Der Luft-Partikel Strom gelangt über den Abluftkasten in die Absaugleitung und damit in das Absaugsystem des Gebäudes. Für eine Referenzmessung ohne Beanspruchung der Rußgranulate steht die zweite Vibrationsrinne zur Verfügung. Hier führt das entsprechende Fallrohr direkt in den Trichter und zu der Messzone der Laserbeugung und anschließend ebenfalls in die Absaugleitung. Der APC-Wert ist die Differenz des Partikelgrößenanteils <125µm in Gew.-% nach pneumatischer Förderung der Rußgranulate und des Partikelgrößenanteils <125µm in Gew.-% der unbeanspruchten Rußgranulate (ohne pneumatische Förderung).

Der 25µm-Druckfilterwert wird in Anlehnung an DIN EN 13900-5 unter Verwendung eines 25 µm Siebes des Typs Filterronde 4-lagig, feinste Lage=Quadratmaschen 25µm der Firma GKD-Gebr. Kufferath ermittelt.

Das Rußgranulat kann ein Furnaceruß, Flammruß, Thermalruß, Channelruß, Gasruß, Plasmaruß, Lichtbogenruß, Acetylenruß, Inversionsruß, bekannt aus DE 19521565, Si-haltiger Ruß, bekannt aus WO 98/45361 oder DE 196113796, metallhaltiger Ruß, bekannt aus WO 98/42778, oder schwermetallhaltiger Ruß, wie er beispielsweise bei der Synthesegasproduktion als Nebenprodukt anfällt, sein.

Das Rußgranulat kann eine spezifische Oberfläche, gemessen nach Brunauer, Emmett und Teller (BET nach ASTM 6556-01a) über Stickstoffadsorption, von 10-1200 m²/g, vorzugsweise von 15-600 m²/g, besonders bevorzugt von 18-400 m²/g, ganz besonders bevorzugt 40-300 m²/g, haben.

Das Rußgranulat kann eine spezifische Oberfläche, gemessen nach STSA (ASTM D-5816-99), von 15-400 m²/g, vorzugsweise von 20-300 m²/g, besonders bevorzugt von 50-250 m²/g, haben.

Das Rußgranulat kann eine Ölabsorptionszahl (OAN-Wert nach ASTM D-2414-01 mit Parafinöl Marcol 82) von 20-200 ml/100g, vorzugsweise von 30-160 ml/100g, besonders bevorzugt von 40-140 ml/100g, ganz besonders bevorzugt von 80-135 ml/100g, haben.

Das Rußgranulat kann eine Einzelperlhärte, gemessen an der Größenfraktion von 0,5-0,71 mm, von 0,1-8,0 g, vorzugsweise von 1,0-6,0 g, besonders bevorzugt von 1,5-3,5 g, haben. Die Einzelperlhärte wird in Anlehnung an ASTM 5230 gemessen, mit dem Unterschied, dass Granulate der Größenfraktion 0,5-0,71 mm gemessen werden unter Verwendung einer manuell bedienbaren Messapparatur mit der Bezeichnung GFP(manuell) der Firma ETEWE GmbH in Karlsruhe.

Das Rußgranulat kann einen 5min-Feinanteil (ASTM D-1508-01) von kleiner 20 Gew.-%, vorzugsweise von kleiner 5 Gew.-%, besonders bevorzugt von kleiner 2 Gew.-%, ganz besonders bevorzugt von kleiner 1 Gew.-%, haben.

Das Rußgranulat kann einen 18min-Abrieb von kleiner 10 Gew.-%, vorzugsweise von kleiner 5 Gew.-%, besonders bevorzugt von kleiner 2 Gew.-%, ganz besonders bevorzugt von kleiner 1 Gew.-%, haben. Der 18 min-Abrieb wird in Anlehnung an ASTM D 1508 gemessen, mit dem Unterschied, dass der Feinanteil < 125 µm bereits nach einer Siebzeit von 2 min anstelle von 5min abgetrennt wird und anschließend die zurückgehaltene Probe um weitere 18 min anstelle von 15 min im Sieb beansprucht wird.

Das Rußgranulat kann eine Schüttdichte (ASTM D-1513-05) von 100-800 g/l, vorzugsweise von 200-650 g/l, besonders bevorzugt von 300-500 g/l, ganz besonders bevorzugt von 340-430 g/l, haben.

Das Rußgranulat kann eine mittlere Granulatgröße Q3:50% von 150-1500 µm, vorzugsweise von 250-900 µm, besonders bevorzugt von 400-750 µm, ganz besonders bevorzugt von 450-700 µm, haben. Die mittlere Granulatgröße Q3:50% wird aus der Granualtkorngrößenverteilung bestimmt. Die volumetrische Verteilungssumme Q3 wird bestimmt unter Verwendung eines kommerziellen Messgerätes mit der Bezeichnung CAMSIZER der Firma Retsch GmbH in Haan, ausgestattet mit Flächenlichtquelle und zwei CCD Kameras zur Bildaufnahme sowie mit einer Dosierrinne DR 100-45 mit Vorratstrichter zur Produktzuführung. Die Granulatgrößen bei dem die Verteilungssumme 10% (=Q3:10%), 50% (=Q3:50%) und 90% (=Q3:90%) durchläuft, werden als charakteristische Größen herangezogen.

Das Rußgranulat kann einen NSP-Wert von kleiner 100 Gew.-%, vorzugsweise von kleiner 50 Gew.-%, besonders bevorzugt von kleiner 35 Gew.-%, ganz besonders bevorzugt von kleiner 25 Gew.-%, haben. Der NSP-Wert ist der Anteil an nicht-sphärischer-Granulate. Der NSP-Wert wird bestimmt unter Verwendung eines kommerziellen Messgerätes mit der Bezeichnung CAMSIZER der Firma Retsch GmbH in Haan. Dieser berechnet von jedem optisch erfassten Granulatteilchen die Sphärizität (Projektionsfläche-zu-Umfang im Quadrat). Der NSP-Wert kennzeichnet den prozentualen Anteil der Granulatteilchen (anzahlbezogen), deren Sphärizität kleiner 0,9 ist (Kugel = 1).

Das Rußgranulat kann einen 5µm-Druckfilterwert von kleiner 100 bar cm²/g, vorzugsweise von kleiner 50 bar cm²/g, besonders bevorzugt von kleiner 20 bar cm²/g, ganz besonders bevorzugt von kleiner 10 bar cm²/g, haben. Der 5µm-Druckfiltertest wird in Anlehnung an DIN EN 13900-5 unter Verwendung eines 5 µm Siebes des Typs Porostar der Firma Haver & Boeker durchgeführt.

Das Rußgranulat kann eine Gesamtdefektfläche im Flachfolientest von kleiner 500 ppm, vorzugsweise von kleiner 100 ppm, besonders bevorzugt von kleiner 50 ppm, ganz besonders bevorzugt von kleiner 30 ppm, haben. Die Gesamtdefektfläche wird in einem Flachfolientest ermittelt. Der Flachfolientest hat zum Ziel, eine quantitative Aussage über die Ruß Verteilung und Rückverdünnungseigenschaften von Ruß/Kunststoff-Konzentraten zu vermitteln. Er wird in Anlehnung an den Normentwurf DIN EN 13900-6 unter Verwendung eines automatischen Folienqualitätsanalysensystems der Firma OCS (optical control systems) in Witten durchgeführt. Die quantitative Bewertung erfolgt mittels elektronischer Bildverarbeitung (winfs5-Software der Firma OCS) in Durchlicht. Hierzu werden die zu prüfenden Ruß/Kunststoff-Konzentrate in einem geeigneten Prüfpolymer mit Hilfe eines Einschneckenextruders auf eine Ruß Konzentration von 1% verdünnt und zu Flachfolien verarbeitet. Die hergestellten Flachfolien werden online mittels elektronischer Bildverarbeitung in Durchlichtverfahren quantitativ bewertet.

Bei dieser Prüfung werden pro Versuch 7,5 m² Folie ausgewertet. Dabei wird die durch Ruß Agglomerate und Verunreinigungen hervorgerufene Verringerung in der Lichttransmission von dem Kamerasystem genutzt, um diese als Defekte zu detektieren. Zur Beurteilung der Folienqualität werden Defekte ab einer Fläche, die der Größe eines kreisrunden Querschnitts von 50 µm entsprechen, in 10 Größenklassen ermittelt und eingeteilt. Außerdem wird die Gesamtdefektfläche der Folie in ppm berechnet. Der Schwellenwert bei der mikroskopischen Auswertung und des Folienanalysesystems wird auf den Level 35 eingestellt. Der Schwellenwert von Level 35 bedeutet, dass Defekte erst als solche erkannt werden, wenn die Lichttransmission unter 35% vom vorherigen Wert reduziert wird. Da die Lichtransmissionswerte der Folie gewissen Schwankungen in Breite und Länge unterliegen, wird der absolute Schwellenwert ständig neu berechnet. Der Grauwert, welcher die Belichtungszeit der Folie regelt wird automatisch nachgeregelt. Wenn die Folie während der Messung zu dunkel wird und der eingestellte Grauwert nicht nachgeregelt werden kann wird die Messung automatisch beendet. Im Zweifelsfall ist die Messung dann zu wiederholen. Der Grauwert wird mit einem Wert von 170 belegt.

Das Rußgranulat kann eine Dispergierhärte (DIN EN 13900-2) von kleiner 200, vorzugsweise von kleiner 50, besonders bevorzugt von kleiner 30, ganz besonders bevorzugt von kleiner 20, haben.

Das Rußgranulat kann bindemittelfrei oder bindemittelhaltig sein.

Ein weiterer Gegenstand der Erfindung ist ein Verfahren zur Herstellung von Rußgranulat, welches dadurch gekennzeichnet ist, dass man Rußpulver mit konstantem Mengenstrom in einem ersten Mischgranulator unter Zugabe einer Granulationsflüssigkeit vorgranuliert und in einem zweiten Mischgranulator ohne weitere Zugabe von Granulationsflüssigkeit fertig granuliert und die Rotordrehzahl des zweiten Mischgranulators im Bereich von 450 - 1000 UpM liegt.

Vorzugsweise kann der erste Mischgranulator schnellrotierend sein. Die Rotor-Drehzahl kann zwischen 300-1000 UpM, vorzugsweise zwischen 450-900 UpM, besonders bevorzugt zwischen 600-800 UpM, sein.

Die Rotor-Drehzahl des zweiten Mischgranulators kann zwischen 450-900 UpM, bevorzugt zwischen 600-800 UpM, sein.

Das Rußpulver kann dem Einlauf des ersten Mischgranulators mit Hilfe einer Massenstrom- oder Volumenstromdosierung zugeführt werden. Hierzu können Zellenradschleusen, Schnecken, Massenstromdosierwaagen, Dosierschnecken, Rotordosierwaagen, etc. eingesetzt werden. Die Messung des Massenstroms kann mit einem Prallplattensystem erfolgen. Der Rußmengendurchsatz des Mischgranulators kann daher gleich der Förderrate des Dosierorgans sein und kann somit in weiten Grenzen eingestellt werden.

Das Rußpulver kann ein Furnaceruß, Flammruß, Thermalruß, Channelruß, Gasruß, Plasmaruß, Lichtbogenruß, Acetylenruß, Inversionsruß, bekannt aus DE 19521565, Si-haltiger Ruß, bekannt aus WO 98/45361 oder DE 196113796, metallhaltiger Ruß, bekannt aus WO 98/42778, oder schwermetallhaltiger Ruß, wie er beispielsweise bei der Synthesegasproduktion als Nebenprodukt anfällt, sein.

Das Rußpulver kann eine spezifische Oberfläche, gemessen nach Brunauer, Emmett und Teller (BET) über Stickstoffadsorption, von 10-1200 m²/g, vorzugsweise von 15-600 m²/g, besonders bevorzugt von 18-400 m²/g, ganz besonders bevorzugt von 40-300 m²/g haben.

Das Rußpulver kann eine spezifische Oberfläche, gemessen nach STSA, von 15-400 m²/g, vorzugsweise von 20-300 m²/g, besonders bevorzugt von 50-250 m²/g, haben.

Das Rußpulver kann eine Ölabsorptionszahl (OAN-Wert) von 20-200 ml/100g, vorzugsweise von 30-160 ml/100g, besonders bevorzugt von 40-140 ml/100g, ganz besonders bevorzugt von 80-135 ml/100g, haben.

Die Granulationsflüssigkeit kann dem Einlauf des ersten Mischgranulators sehr einlaufsnah zugeführt werden. Sie kann bei einem Druck von 3 bis 7 bar über mehrere Sprühdüsen erfolgen, welche an mehreren Sprühdüsenhaltern montiert sein können.

Als Granulationsflüssigkeit können Wasser oder Kohlenwasserstoffe, beispielsweise Benzin oder Cyclohexan, mit oder ohne Zugabe von Bindemitteln, beispielsweise Melasse, Zucker, Ligninsulfonate sowie zahlreiche andere Stoffe alleine oder in Kombination miteinander, eingesetzt werden.

Das Rußgranulat aus dem Mischgranulator kann anschließend getrocknet werden. Die Trocknertemperatur kann zwischen 100° und 300°C, vorzugsweise zwischen 140° und 200°C, betragen. Die Temperatur des Rußgranulats beim Trockneraustritt kann zwischen 30° und 140°C, vorzugsweise zwischen 40° und 70°C, betragen.

Der Stator des Mischgranulators kann während der Granulation auf eine Temperatur zwischen 20 und 150°C, bevorzugt auf 80 bis 120°C, erwärmt werden, um ein Verkleben des Rußes mit der Wandung des Stators weitgehend zu verhindern.

Die Verweildauer des Rußes in den in Reihe geschalteten schnellrotierenden Mischgranulatoren, die sich aus dem Quotienten "Mischgranulator-Granulationsraum / Rußpulvervolumenstrom" berechnet, kann zwischen 50-500 sec, vorzugsweise zwischen 100-350 sec, besonders bevorzugt zwischen 150-250 sec, sein.

Füllmenge und Verweilzeit können durch Anheben des Auslaufs gegenüber dem Einlauf verlängert werden. Der sich dabei ergebende Winkel zwischen der Achse des Granulators und der Horizontalen kann zwischen 0 und 15° verändert werden.

Die Temperatur des Rußes in den Mischgranulatoren kann zwischen 10-100 °C, vorzugsweise zwischen 30-90 °C, besonders bevorzugt zwischen 50-80 °C, sein.

Die maximale Umfangsgeschwindigkeit der Mischwerkzeuge in den schnellrotierenden Mischgranulatoren kann zwischen 10-50 m/s, vorzugsweise zwischen 12-30 m/s, besonders bevorzugt zwischen 15-25 m/s, sein.

Als schnellrotierende Mischgranulatoren können Ringschichtmischgranulatoren, beispielsweise der Firma Ruberg-Mischtechnik oder Lödige in Paderborn, oder andere Durchflussmischgranulatoren, ausgestattet mit einer Pin- bzw. Stachelwelle oder anderen Mischwerkzeugen, welche auf der schnellrotierenden Mischerwelle montiert sind, beispielsweise Stifte, Paddeln oder Schaufeln, eingesetzt werden.

Die Stacheln können in drei Helixes um die Stachelwelle angeordnet sein. Der Wandabstand der Stacheln kann 4 mm bis 15 mm, vorzugsweise 4 mm bis 6 mm, betragen.

Der erste Mischgranulator kann ein Ringschichtmischgranulator sein, wie er aus EP 1464681 bekannt ist.

Der zweite Mischgranulator kann ebenfalls ein Ringschichtmischgranultor sein, wie er aus EP 1464681 bekannt ist, mit dem Unterschied, dass Vorrichtungen für die Zugabe von Granulationsflüssigkeit nicht erforderlich sind.

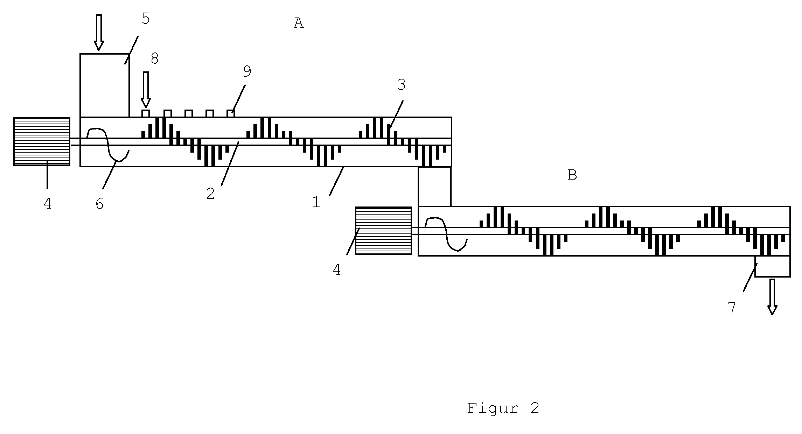

Das erfindungsgemäße Verfahren kann mit zwei in Reihe geschalteten Ringschichtmischgranulatoren mit Stachelwellen durchgeführt werden. Der Aufbau einer solchen Reihenschaltung (RMG 1 (A) und RMG 2 (B)) sowie eines solchen Ringschichtmischgranulators sind schematisch in Figur 2 dargestellt.

Der Granulator kann jeweils aus einem liegend angeordneten feststehenden Rohr bzw. Trog 1, dem Stator, und einer darin axial angeordneten sich drehenden Stachelwelle 2 mit den wendelförmig angeordneten Stacheln 3 bestehen. Die Stachelwelle wird mit einem Antriebsmotor 4 angetrieben. Zwischen der Stachelwelle 2 und dem Stator 1 befindet sich der Granulationsraum des Granulators. Das Rußpulver kann dem Ringschichtmischgranulator am Einlauf 5 zugeführt werden. Im Bereich des Einlaufs kann sich auf der Stachelwelle eine Förderschnecke 6 befinden, die den Ruß in axialer Richtung zum Auslauf 7 fördert. Der Stator 1 kann doppelwandig ausgeführt sein und erlaubt die Temperierung der Statorwandung mit Hilfe einer Flüssigkeit 8. Längs des Stators können sich Durchgangsbohrungen 9 befinden, über die Sprühdüsen für die Zugabe der Granulationsflüssigkeit eingeführt werden können.

Die erfindungsgemäßen Rußgranulate können als Füllstoff, Verstärkerfüllstoff, UV-Stabilisator, Leitfähigkeitsruß oder Pigment verwendet werden. Die erfindungsgemäßen Ruße können in Kautschuk, Kunststoff, Druckfarben, Tinten, Inkjet-Tinten, Tonern, Lacken, Farben, Papier, Bitumen, Beton und anderen Baustoffen eingesetzt werden. Die erfindungsgemäßen Ruße können als Reduktionsmittel in der Metallurgie angewendet werden.

Die erfindungsgemäßen Rußgranulate haben den Vorteil, dass sie sehr förderstabil und gleichzeitig leicht dispergierbar sind.

Das erfindungsgemäße Verfahren hat den Vorteil, dass sehr hohe Durchsatzraten erzielt werden können.

Beispiele:
Die verwendeten Rußpulver der Beispiele 1 bis 8 werden gemäß DE 19521565 hergestellt.

Die verwendeten Rußpulver der Beispiele 9 und 10 werden gemäß US 2002/0156177 A1 hergestellt.

### Herstellung der Rußgranulate - Vergleichsbeispiele

Die Vergleichsruße werden in einem Stachelwellen-Ringschichtmischgranulator (RMG 800 der Firma Ruberg Mischtechnik KG) mit einer Troglänge von 1950 mm und einem Troginnendurchmesser von 620 mm hergestellt. Der Wellendurchmesser beträgt 150 mm. Die Stacheln sind in drei Helixes um die Stachelwelle angeordnet und haben einen Durchmesser von 15-16 mm. Der Wandabstand der Stacheln beträgt 4 bis 10 mm. Der Granulator wird mit Wasser von 95°C temperiert. Die Einspeisung der Granulationsflüssigkeit erfolgt über zwei Düsenhalter mit je zwei Sprühdüsen bei einem Granulationsflüssigkeitsdruck an den Sprühdüsen von konstant 3,5 bar. Die Sprührichtung der Düsen hat einen Winkel von 45° zur und in die Richtung der Strömungsrichtung des Rußes. Die Sprühdüsen werden dabei möglichst nahe dem Rußeinlauf in den RMG 800 positioniert, um eine optimale Granulationswirkung über die verbleibende Länge des RMG 800 zu erhalten. Als Bindemittel wird der Granulationsflüssigkeit Natriumligninsulfonat in einer Konzentration von 0-2000 ppm zugesetzt. Die Rußperlen werden anschließend in einem Trommeltrockner bei 180 °C getrocknet.

### Herstellung der Rußgranulate - Erfindungsgemäße Beispiele Mit den zwei in Reihe geschalteten

Ringschichtmischgranulatoren nach Figur 2 werden verschiedene erfindungsgemäße Rußtypen granuliert. Der erste Ringschichtmischgranulator (RMG 800 der Firma Ruberg Mischtechnik KG) hat eine Troglänge von 1950 mm und einen Innendurchmesser von 620 mm. Der Wellendurchmesser beträgt 150 mm. Der zweite Ringschichtmischgranulator (RMG 600 der Firma Ruberg Mischtechnik KG) hat eine Troglänge von 2180 mm und einen Troginnendurchmesser von 515 mm. Der Wellendurchmesser beträgt 290 mm. Die Stacheln in beiden Ringschichtmischgranulatoren sind in drei Helixes um die Stachelwelle angeordnet und haben einen Durchmesser von 15-16 mm. Der Wandabstand der Stacheln beträgt 4 bis 10 mm. Der Granulator wird mit Wasser von 95°C temperiert. Die Einspeisung der Granulationsflüssigkeit am ersten Ringschichtmischgranulator erfolgt über zwei Düsenhalter mit je zwei Sprühdüsen bei einem Granulationsflüssigkeitsdruck an den Sprühdüsen von konstant 3,5 bar. Die Sprührichtung der Düsen hat einen Winkel von 45° zur und in die Richtung der Strömungsrichtung des Rußes. Die Sprühdüsen werden dabei möglichst nahe dem Rußeinlauf in den RMG 800 positioniert, um eine optimale Granulationswirkung über die verbleibende Länge des RMG 800 zu erhalten. Als Bindemittel wird der Granulationsflüssigkeit Natriumligninsulfonat in einer Konzentration von 0-2000 ppm zugesetzt. Die Rußperlen werden anschließend in einem Trommeltrockner bei 180 °C getrocknet.

Die Vergleichsruße und erfindungsgemäßen Rußgranulate werden mit den in Tabelle 1 angegebenen Prozeßparametern hergestellt.

Die analytischen und anwendungstechnischen Eigenschaften der getrockneten Rußgranulate sind in Tabelle 2a und 2b zusammengestellt.

**Tabelle 1**

| Ausgangsruß und Prozessparameter | Vergleichsgranulat Beispiel 1 | Vergleichsgranulat Beispiel 2 | Vergleichsgranulat Beispiel 3 | Erfindungsgem. Rußgranulat Beispiel 4 | Erfindungsgem. Rußgranulat Beispiel 5 | Erfindungsgem. Rußgranulat Beispiel 6 | Erfindungsgem. Rußgranulat Beispiel 7 | Erfindungsgem. Rußgranulat Beispiel 8 | Erfindungsgem. Rußgranulat Beispiel 9 | Erfindungsgem. Rußgranulat Beispiel 10 |
|---|---|---|---|---|---|---|---|---|---|---|
| | Beispiel 1 | Beispiel 2 | Beispiel 3 | Rußgranulat Beispiel 4 | Rußgranulat Beispiel 5 | Rußgranulat Beispiel 6 | Rußgranulat Beispiel 7 | Rußgranulat Beispiel 8 | Rußgranulat Beispiel 9 | Rußgranulat Beispiel 10 |
| Rußpulver BET [m²/g] | 126 | 102 | 75 | 126 | 126 | 126 | 102 | 75 | 19 | 19 |
| Rußpulver STSA [m²/g] | 85 | 82 | 74 | 85 | 85 | 85 | 82 | 74 | 18 | 19 |
| Rußpulver OAN [m²/g] | 115 | 98 | 101 | 115 | 115 | 115 | 98 | 101 | 80 | 135 |
| Rußmassenstrom [kg/h] | 1530 | 1680 | 1760 | 1530 | 1530 | 1790 | 1680 | 1760 | 1620 | 1710 |
| Drehzahl RMG 1 [min⁻¹] | 680 | 600 | 620 | 600 | 750 | 750 | 750 | 750 | 750 | 750 |
| Stromaufnahme RMG 1 [A] | 93 | 80 | 83 | 49 | 51 | 52 | 53 | 52 | 51 | 53 |
| Drehzahl RMG 2 [min⁻1] | - | - | - | 600 | 700 | 700 | 700 | 700 | 700 | 700 |
| Stromaufnahme RMG 2 [A] | - | - | - | 53 | 50 - 60 | 55 - 65 | 55 - 65 | 55 - 65 | 54 - 63 | 55 - 64 |
| Trocknertemperatur [°C] | 180 | 180 | 180 | 180 | 180 | 180 | 180 | 180 | 180 | 180 |

**Tabelle 2a**

| Analytik | Vergleichsgranulat | Vergleichsgranulat | Vergleichsgranulat | Erfindungsgem. | Erfindungsgem. | Erfindungsgem. | Erfindungsgem. | Erfindungsgem. | Erfindungsgem. | Erfindungsgem. |
|---|---|---|---|---|---|---|---|---|---|---|
| | Beispiel 1 | Beispiel 2 | Beispiel 3 | Rußgranulat Beispiel 4 | Rußgranulat Beispiel 5 | Rußgranulat Beispiel 6 | Rußgranulat Beispiel 7 | Rußgranulat Beispiel 8 | Rußgranulat Beispiel 9 | Rußgranulat Beispiel 10 |
| APC-Wert [Gew.-%] | 26 | 30 | 21 | 16 | 12 | 13 | 14 | 6 | 8 | 8 |
| Druckfilterwert, 25 µm [bar cm²/g] | 0,2 | 0,3 | 0,2 | 0,2 | 0,2 | 0, 1 | 0,2 | 0, 1 | 0,3 | 1,9 |
| Druckfilterwert, 5 µm [bar cm²/g] | 34 | 5 | 9 | 30 | 19 | 28 | 2 | 4 | 35 | |
| Einzelperhärte [g] | 2,5 | 2,5 | 2, 9 | 2,5 | 2,3 | 2,4 | 2,3 | 2,8 | 6,5 | 7,0 |
| Dispergier-härte [-] | 14 | 22 | 30 | 20 | 19 | 19 | 18 | 27 | 20 | 14 |
| Flachfolientest: Gesamtdefektfläche [ppm] | 39 | 15 | 28 | 35 | 33 | 29 | 15 | 26 | 10 | 15 |

**Tabelle 2b**

| Analytik | Vergleichsgranulat | Vergleichsgranulat | Vergleichsgranulat | Erfindungsgem. | Erfindungsgem. | Erfindungsgem. | Erfindungsgem. | Erfindungsgem. | Erfindungsgem. | Erfindungsgem. |
|---|---|---|---|---|---|---|---|---|---|---|
| | Beispiel 1 | Beispiel 2 | Beispiel 3 | Rußgranulat Beispiel 4 | Rußgranulat Beispiel 5 | Rußgranulat Beispiel 6 | Rußgranulat Beispiel 7 | Rußgranulat Beispiel 8 | Rußgranulat Beispiel 9 | Rußgranulat Beispiel 10 |
| Feinanteil, 2min [%] | 1,5 | 1,8 | 1,6 | 1,0 | 0,4 | 0, 6 | 0,5 | 0,4 | - | - |
| Feinanteil, 5min [%] | 4,4 | - | - | - | 0,8 | 0, 9 | - | - | - | - |
| Feinanteil, 10min [%] | 6,8 | - | - | - | 1,0 | 1,2 | 1,0 | 0, 7 | 1,8 | 2,0 |
| Abrieb, 18min [%] | 8,4 | 5,2 | 3,2 | 2,0 | 1,5 | 1,9 | 1,0 | 0, 9 | 1,0 | 1,3 |
| Schütt-dichte [g/l] | 336 | 370 | 380 | 352 | 354 | 372 | 380 | 408 | 400 | 345 |
| Mittlerer Granulat-durchmesser Q3:50% [µm] | 735 | 920 | 790 | 650 | 500 | 500 | 470 | 590 | 600 | 550 |
| Q3:90% [µm] | 1160 | 1530 | 1430 | 1300 | 1050 | 994 | 810 | 1280 | 1210 | 1170 |
| Q3:10% [µm] | 230 | 420 | 290 | 280 | 270 | 284 | 270 | 250 | 230 | 210 |
| NSP-Wert [%] | 41 | 28 | 29 | 23 | 18 | 17 | 21 | 21 | 18 | 21 |

### Bestimmungsmethoden:

Die analytischen und anwendungstechnischen Daten der Rußgranulate werden nach folgenden Normen bzw. in Anlehnung der folgenden Normen bestimmt:
BET-Oberfläche: nach ASTM 6556-01a.
STSA-Oberfläche: nach ASTM D-5816-99.
Ölabsorptionzahl: nach ASTM D-2414-01. Zur Bestimmung der Ölabsorptionzahl wird das Parafinöl der Firma Exxon, Marcol 82, eingesetzt.

Einzelgranulathärte: in Anlehnung an ASTM 5230, mit dem Unterschied, dass Granulate der Größenfraktion 0,5-0,71 mm gemessen werden unter Verwendung einer manuell bedienbaren Messapparatur mit der Bezeichnung GFP (manuell) der Firma ETEWE GmbH in Karlsruhe.

Feinanteil < 125 µm: in Anlehnung an ASTM D-1508-01, mit dem Unterschied, dass zusätzlich zu dem Feinanteil nach einer Siebzeit von 5 min auch der Feinanteil nach einer Siebzeit von 2 min und 10 min bestimmt wird.

Abrieb, 18 min: in Anlehnung an ASTM D 1508, mit dem Unterschied, dass der Feinanteil < 125 µm bereits nach einer Siebzeit von 2 min anstelle von 5min abgetrennt wird und anschließend die zurückgehaltene Probe um weitere 18 min anstelle von 15 min im Sieb beansprucht wird.

APC-Wert: Der APC-Wert kennzeichnet das Abriebs- und Bruchverhalten von Rußgranulat bei der pneumatischen Druckförderung. Bestimmt werden die Partikelgrößenverteilungen von Rußgranulat vor und nach der Förderung über eine Teststrecke. Über die Erhöhung des Staubanteils von Rußgranulat während der pneumatischen Förderung, lassen sich Rückschlüsse auf das Förderverhalten der eingesetzten Rußgranulat-Typen ziehen.

Der APC-Wert wird unter Verwendung einer pneumatischen Fördertestapparatur bestimmt [Käferstein P., Mörl L., Dalichau J., Behns W., Anlage zum Schlussbericht des AiF-Projektes "Zerfallsverhalten von Partikeln in Wirbelschichten", Forschungsvorhaben-Nr. 11151 B, Magdeburg, 1999, S. 17 - 21], wobei abweichend hiervon die Granulatprobe über einen Venturi-Injektor eingebracht wird. Die eingesetzte pneumatische Druckfördertestapparatur ist in DE 102007025928.1 beschrieben. Die pneumatische Druckfördertestapparatur besteht im Wesentlichen aus
- zwei Förderrinnen,
- einem Luftstromregelventil,
- einem Venturi-Injektor,
- einer Förderstrecke ("Schlaufe + Bogen"),
- einem Laserbeugungsmessgerät
- einem Abluftkasten
- und einer Schallschutzbox.

Eine Skizze der verwendeten pneumatischen Druckfördertestapparatur zeigt Figur 1.

Die Schallschutzbox hat die Maße 1,9 * 1,3 * 1,0 m (L/H/B). Die Rohrleitungen aus Edelstahl besitzen einen Innendurchmesser von 44 mm. Die Schlaufe hat einen Umfang von 1,5 m. Der Bogen hat eine Länge von 0,5 m.

Die Luft und der benötigte Förderdruck wird aus dem Druckluftnetz (6 bar) bezogen. Über das Luftstrom-Regelventil wird der Luftstrom bzw. die Luftgeschwindigkeit eingestellt, wobei die Anlage für einen maximalen Luftstrom von 180 m³/h ausgelegt ist. Bei den Versuchen wird eine Luftgeschwindigkeit von 8 m/s, bezogen auf den Rohrquerschnitt von 44 mm, eingestellt.

Die Dosierung der Rußgranulate in das Fallrohr erfolgt über eine Vibrationsrinne. Die Vibrationsrinne und die Öffnung des Fallrohres sind zum Zwecke der Schallisolierung eingehaust. Zum Befüllen des Trichters lässt sich ein durchsichtiger Kunststoffdeckel öffnen. Bei den vorliegenden Versuchen wird die Förderrate an der Vibrationsrinne so gewählt, so dass sich eine Feststoffbeladung von 27 g/kg Luft ergibt.

Zur Einschleusung des Rußes in die Förderstrecke wird ein Venturi-Injektor benötigt. Der Injektor hat einen Durchmesser an der Engstelle von 22 mm und eine Beschleunigungsstrecke von 50 mm(Länge von der Rußgranulataufgabe über einen Trichter bis zum Diffusorende).

Nach dem Injektor folgt die Förderstrecke (Schlaufe + Bogen), in der die Rußgranulate beansprucht werden. Anschließend gelangt der Ruß über einen Trichter in den aufgeweiteten Laserstrahl des Laserbeugungsmessgerätes. Die Partikelgrößenverteilung wird aufgenommen. Der Luft-Partikel Strom gelangt über den Abluftkasten in die Absaugleitung und damit in das Absaugsystem des Gebäudes.

Für eine Referenzmessung ohne Beanspruchung der Rußgranulate steht die zweite Vibrationsrinne zur Verfügung. Hier führt das entsprechende Fallrohr direkt in den Trichter und zu der Messzone der Laserbeugung und anschließend ebenfalls in die Absaugleitung.

Der APC-Wert ist die Differenz des Partikelgrößenanteils <125µm in Gew.-% nach pneumatischer Förderung der Rußgranulate und des Partikelgrößenanteils <125µm in Gew.-% der unbeanspruchten Rußgranulate (ohne pneumatische Förderung).

Granualtkorngrößenverteilung: Die volumetrische Verteilungssumme Q3 wird bestimmt unter Verwendung eines kommerziellen Messgerätes mit der Bezeichnung CAMSIZER der Firma Retsch GmbH in Haan, ausgestattet mit Flächenlichtquelle und zwei CCD Kameras zur Bildaufnahme sowie mit einer Dosierrinne DR 100-45 mit Vorratstrichter zur Produktzuführung. Die Granulatgrößen bei dem die Verteilungssumme 10% (=Q3:10%), 50% (=Q3:50%) und 90% (=Q3:90%)durchläuft werden als charakteristische Größen herangezogen.

Anteil Nicht-sphärischer-Granualte (NSP): Der NSP-Wert wird bestimmt unter Verwendung eines kommerziellen Messgerätes mit der Bezeichnung CAMSIZER der Firma Retsch GmbH in Haan. Dieser berechnet von jedem optisch erfassten Granulatteilchen die Sphärizität (Projektionsfläche-zu-Umfang im Quadrat). Der NSP-Wert kennzeichnet den prozentualen Anteil der Granulatteilchen (anzahlbezogen), deren Sphärizität kleiner 0,9 ist (Kugel = 1).
Gesamtgranulathärte (Mass Strength): nach ASTM D-1937-05
Schüttdichte: nach ASTM D-1513-05.
Druckfiltertest, 25µm / 5µm: in Anlehnung an DIN EN 13900-5 unter Verwendung eines 25 µm Siebes des Typs Filterronde 4-lagig, feinste Lage=Quadratmaschen 25µm der Fa. GKD-Gebr.Kufferath bzw. eines 5 µm Siebes des Typs Porostar der Firma Haver & Boeker.
Flachfolientest: Der Flachfolientest hat zum Ziel, eine quantitative Aussage über die Ruß Verteilung und Rückverdünnungseigenschaften von Ruß/Kunststoff-Konzentraten zu vermitteln. Er wird in Anlehnung an den Normentwurf DIN EN 13900-6 unter Verwendung eines automatischen Folienqualitätsanalysensystems der Firma OCS (optical control systems) in Witten durchgeführt. Die quantitative Bewertung erfolgt mittels elektronischer Bildverarbeitung (winfs5-Software der Firma OCS) in Durchlicht.

Hierzu werden die zu prüfenden Ruß/Kunststoff-Konzentrate in einem geeigneten Prüfpolymer mit Hilfe eines Einschneckenextruders auf eine Ruß Konzentration von 1% verdünnt und zu Flachfolien verarbeitet. Die hergestellten Flachfolien werden online mittels elektronischer Bildverarbeitung in Durchlichtverfahren quantitativ bewertet.

Bei dieser Prüfung werden pro Versuch 7,5 m² Folie ausgewertet. Dabei wird die durch Ruß Agglomerate und Verunreinigungen hervorgerufene Verringerung in der Lichttransmission von dem Kamerasystem genutzt, um diese als Defekte zu detektieren.

Zur Beurteilung der Folienqualität werden Defekte ab einer Fläche, die der Größe eines kreisrunden Querschnitts von 50 µm entsprechen, in 10 Größenklassen ermittelt und eingeteilt. Außerdem wird die Gesamtdefektfläche der Folie in ppm berechnet.

Die gefundene Defektanzahl hängt dabei ganz wesentlich von der in der Software eingestellten Empfindlichkeit/Schwellenwert ab. Ein Vergleich zwischen lichtmikroskopischen Auswertungen und des Folienanalysesystems hat gezeigt, dass ein Schwellenwert, bezeichnet mit Level 35, vergleichbare Ergebnisse liefert. Der Schwellenwert von Level 35 bedeutet, dass Defekte erst als solche erkannt werden, wenn die Lichttransmission unter 35% vom vorherigen Wert reduziert wird. Da die Lichtransmissionswerte der Folie gewissen Schwankungen in Breite und Länge unterliegen, wird der absolute Schwellenwert ständig neu berechnet. Der Grauwert, welcher die Belichtungszeit der Folie regelt wird automatisch nachgeregelt. Wenn die Folie während der Messung zu dunkel wird und der eingestellte Grauwert nicht nachgeregelt werden kann wird die Messung automatisch beendet. Im Zweifelsfall ist die Messung dann zu wiederholen. Der Grauwert wurde mit einem Wert von 170 belegt.
Dispergierhärte: nach DIN EN 13900-2.

Der Vorteil der erfindungsgemäßen Rußgranulate (Beispiele 4-10) ist, dass sie sehr förderstabil und gleichzeitig leicht dispergierbar sind. Dies äußert sich in einem APC-Wert (Fördergeschwindigkeit von 8 m/s, Feststoffbeladung von 27g pro kg Luft) von kleiner 20 Gew.-%, während der APC-Wert der Vergleichsbeispiele (Beispiel 1-3) größer 25 Gew.-% ist. Auch zeigen die erfindungsgemäßen Rußgranulate deutliche Vorteile im Abrieb. In den Dispergiereigenschaften, gekennzeichnet durch den Druckfilterwert, die Einzelperlhärte, die Dispergierhärte und die Gesamtdefektfläche beim Flachfolientest, zeigen die erfindungsgemäßen Rußgranulate (Beispiel 4-10) gleichgute Dispergiereigenschaften wie die Vergleichsbeispiele (Beispiel 1-3). Beispielsweise ist der 25µm Druckfilterwert in allen Fällen kleiner oder gleich 2 bar cm²/g. Der 5µm Druckfilterwert ist für die Beispiele 4-8 kleiner oder gleich 30 bar cm²/g.

Diese exzellenten Granulateigenschaften können bei dem erfindungsgemäßen Verfahren selbst bei vergleichsweise hohen Durchsätzen erzielt werden, wie der Vergleich von Beispiel 1 mit Beispiel 6 zeigt.

## Patentansprüche

1. Rußgranulat, **dadurch gekennzeichnet, dass** der APC-Wert, gemessen bei einer Fördergeschwindigkeit von 8 m/s und einer Feststoffbeladung von 27 g/kg, kleiner oder gleich 20 Gew.-% und der 25 µm Druckfilterwert kleiner 5 bar cm²/g ist.

2. Verfahren zur Herstellung von Rußgranulat gemäß Anspruch 1, **dadurch gekennzeichnet, dass** man Rußpulver in einem ersten Mischgranulator unter Zugabe einer Granulationsflüssigkeit mit oder ohne Bindemittel vorgranuliert und in einem zweiten Mischgranulator ohne weitere Zugabe von Granulationsflüssigkeit fertig granuliert und die Rotordrehzahl des zweiten Mischgranulators im Bereich zwischen 450 - 1000 UpM liegt.

3. Verwendung der Ruße gemäß Anspruch 1 als Füllstoff, Verstärkerfüllstoff, UV-Stabilisator, Leitfähigkeitsruß, Pigment oder Reduktionsmittel.

4. Verwendung der Ruße gemäß Anspruch 1 in Kautschuk, Kunststoff, Druckfarben, Tinten, Inkjet-Tinten, Tonern, Lacken, Farben, Papier, Bitumen, Beton und anderen Baustoffen.

## Claims

1. Granulated carbon black, **characterized in that** the APC value, measured at a transport velocity of 8 m/s and a solids loading of 27 g/kg, is less than or equal to 20% by weight and the 25 µm pressure filter value is less than 5 bar cm²/g.

2. Process for producing granulated carbon black according to Claim 1, **characterized in that** carbon black powder is pregranulated in a first mixing granulator with addition of a granulating liquid with or without binder and granulated to completion in a second mixing granulator without further addition of granulating liquid, and the rotor speed of the second mixing granulator lies in the range from 450 to 1000 rpm.

3. Use of the carbon blacks according to claim 1 as filler, reinforcing filler, UV stabilizer, conductive carbon black, pigment or reducing agent.

4. Use of the carbon blacks according to claim 1 in rubber, plastic, printing inks, inks, inkjet inks, toners, surface coatings, paints, paper, bitumen, concrete and other building materials.

## Revendications

1. Granulat de suie, **caractérisé en ce que** l'indice APC, mesuré à une vitesse de transport de 8 m/s et une charge en matière solide de 27 g/kg, est inférieur ou égal à 20 % en poids et la valeur de pression du filtre à 25 µm est inférieure à 5 bar cm²/g.

2. Procédé de fabrication d'un granulat de suie selon la revendication 1, **caractérisé en ce qu'**on prégranule de la poudre de suie dans un premier granulateur de mélange, moyennant l'ajout d'un liquide de granulation avec ou sans liant, et parachève la granulation dans un second granulateur de mélange sans nouvel ajout de liquide de granulation et la vitesse de rotor du second granulateur de mélange se situe dans la plage entre 450 et 1000 tours par minute.

3. Utilisation des suies selon la revendication 1 en tant que charge, charge de renforcement, agent de stabilisation UV, noir de carbone conducteur, pigment ou agent de réduction.

4. Utilisation des suies selon la revendication 1 dans du caoutchouc, des matières plastiques, des peintures d'impression, des encres, des encres d'imprimantes à jet d'encre, des toners, des laques, des peintures, du papier, du bitume, du béton et d'autres matériaux de construction.
